# DEMANDE DE BREVET EUROPEEN

(11) **EP 3 437 746 A1**
(43) Date de publication de la demande: **06.02.2019**
(21) Numéro de dépôt: 18186768.0
(22) Date de dépôt: 01.08.2018
(51) Int. Cl.: B09C 1/10, B09C 1/06, B09C 1/00

(54) **PROCÉDÉ ET DISPOSITIF DE DÉPOLLUTION D'UN SOL CONTAMINÉ**

(30) Priorité: 01.08.2017 FR 1757362
(71) Demandeur: Total Marketing Services, 92800 Puteaux (FR)
(72) Inventeur: LEBEL, Patrick, 92240 Malakoff (FR)
(74) Mandataire: Lavoix

(57) **Abrégé**

Le procédé de dépollution d'un sol contaminé (1) par des hydrocarbures et/ou huiles, comprend au moins les étapes suivantes :
- chauffer un liquide à une température d'activité bactériologique inférieure à 100°C au moyen d'une énergie renouvelable,
- faire circuler le liquide chauffé dans le sol contaminé (1) à dépolluer afin de chauffer ledit sol à une température d'activité bactériologique favorisant l'activité des bactéries dans le sol afin de dépolluer ledit sol (1) au moins par bio-stimulation.

## Description

La présente invention concerne un procédé de dépollution d'un sol contaminé par des hydrocarbures et/ou huiles ainsi qu'un dispositif de dépollution pour la mise en oeuvre d'un tel procédé.

Une telle dépollution peut être mise en oeuvre lors du démantèlement d'une station-service par exemple afin de rendre compatible le site pour un usage comparable à la dernière période d'exploitation avant l'exploitation de la station-service ou pour un usage différent à savoir pour une habitation, un parking, un centre de loisir etc...

Certains procédés de dépollution nécessitent d'excaver une partie des sols contaminés et de traiter la matière prélevée afin d'en retirer les hydrocarbures et les huiles avant de remettre la matière traitée dans le sol ou de la remplacer par des matériaux extérieurs après évacuation pour un traitement en biocentre par exemple. De tels procédés ne sont pas satisfaisants en matière d'efficacité energétique, environnementale, sociétale et nécessitent la mise en oeuvre de moyens importants. Un procédé dans lequel le traitement intervient directement dans le sol est donc préférable.

Pour dépolluer un sol « in situ », il est connu d'extraire les hydrocarbures du sol en les faisant passer à l'état gazeux et en évacuant les gaz produits hors du sol. Pour ce faire, le sol est chauffé à haute température, par exemple de l'ordre de 400°C, et des moyens d'extraction du gaz sont disposés dans le sol afin d'évacuer les hydrocarbures à l'état gazeux hors du sol. Le chauffage du sol est par exemple obtenu grâce à des brûleurs à gaz. Un tel procédé de dépollution est connu sous le nom de dépollution par désorption thermique.

Un tel procédé est cependant complexe à mettre en oeuvre, notamment pour chauffer le sol à haute température, coûteux et peu responsable en matière de préservation de l'environnement. En effet, la mise en oeuvre du procédé génère une quantité important de dioxyde de carbone qui doit être traitée.

L'un des buts de l'invention est de pallier ces inconvénients en proposant un procédé de dépollution d'un sol peu coûteux, simple à mettre en oeuvre et respectueux de l'environnement.

A cet effet, l'invention concerne un procédé de dépollution d'un sol contaminé par des hydrocarbures et/ou huiles, comprenant au moins les étapes suivantes :
- chauffer un liquide à une température d'activité bactériologique inférieure à 100°C au moyen d'une énergie renouvelable, et
- faire circuler le liquide chauffé dans le sol contaminé à dépolluer afin de chauffer ledit sol à une température d'activité bactériologique favorisant l'activité des bactéries dans le sol afin de dépolluer ledit sol au moins par bio-stimulation.

La bio-stimulation permet de biodégrader les hydrocarbures et huiles dans le sol au moyen des bactéries présentes dans le sol. Cette activité des bactéries peut être favorisée simplement en chauffant le sol à des températures assez basses, inférieures à 100°C. Ainsi, le procédé ne nécessite pas de chauffer le sol à haute température, ce qui le rend plus simple et moins coûteux. En outre, ce chauffage est obtenu au moyen d'une énergie renouvelable, ce qui le rend encore moins coûteux et plus respectueux de l'environnement. Le liquide chauffé forme un vecteur de chaleur renouvelable et recyclable.

Selon d'autres caractéristiques du procédé de dépollution selon l'invention, prises isolément ou selon toute combinaison techniquement possible :
- le chauffage du sol contaminé par le liquide se fait par conduction en faisant circuler le liquide chauffé dans un circuit de tuyauterie s'étendant dans ledit sol contaminé ;
- le chauffage du sol contaminé par le liquide se fait en outre par injection d'au moins une partie du liquide chauffé dans le sol contaminé ;
- le procédé comprend en outre une étape de circulation d'air chauffé dans le sol contaminé, l'air étant chauffé à une température d'activité bactériologique inférieure à 100°C au moyen d'une énergie renouvelable ;
- le procédé comprend une étape d'injection d'oxygène et/ou de nutriments dans le sol contaminé afin de promouvoir le développement bactériologique dans le sol contaminé ;
- le procédé comprend en outre une étape de dépollution du sol contaminé par désorption thermique, en chauffant le liquide à une température de désorption thermique, différente de la température d'activité bactériologique et inférieure ou égale 150°C, au moyen d'une énergie renouvelable et en faisant circuler ledit liquide chauffé dans le sol contaminé afin de chauffer ledit sol à une température de désorption thermique afin de dépolluer le sol contaminé par désorption thermique ;
- l'étape de dépollution du sol par désorption thermique comprend en outre l'aspiration des gaz produits par le chauffage du sol contaminé à une température de désorption thermique ;
- l'énergie renouvelable est de l'énergie solaire ;
- les paramètres d'entrée du procédé, tels que la température de chauffage du liquide, la durée de circulation du liquide dans le sol, sont réglés par un dispositif de commande situé à distance du sol contaminé ;
- le procédé comprend une étape préalable de déploiement d'un dispositif de dépollution transportable sur le sol contaminé, ledit dispositif de dépollution comprenant au moins un réservoir de liquide, un dispositif de chauffage du liquide et un circuit de tuyauterie pour faire circuler le liquide dans le sol contaminé.

L'invention concerne également un dispositif de dépollution pour la mise en oeuvre d'un procédé de dépollution d'un sol contaminé tel que décrit ci-dessus, comprenant au moins :
- une source de liquide,
- un dispositif de chauffage permettant de chauffer le liquide de la source de liquide à une température d'activité bactériologique inférieure à 100°C au moyen d'une énergie renouvelable,
- un circuit de tuyauterie permettant de faire circuler le liquide dans le dispositif de dépollution et dans le sol contaminé, et
- un dispositif de mise en circulation du liquide dans le circuit de tuyauterie,

Selon d'autres caractéristiques du dispositif de dépollution selon l'invention, prises isolément ou selon toute combinaison techniquement possible :
- le dispositif de dépollution comprend en outre un contenant autonome en énergie et transportable, agencé pour recevoir la source de liquide, le dispositif de chauffage, le circuit de tuyauterie et le dispositif de mise en circulation lors du transport du dispositif de dépollution ; et
- le dispositif de dépollution est agencé pour être pilotable à distance par l'intermédiaire d'une interface distante.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'un dispositif de dépollution permettant la mise en oeuvre du procédé selon l'invention,
- la Fig. 2 est une représentation schématique détaillée d'une partie du dispositif de dépollution de la Fig. 1 s'étendant hors du sol, et
- la Fig. 3 est une représentation schématique en coupe d'une partie du dispositif de dépollution de la Fig. 1, s'étendant dans le sol.

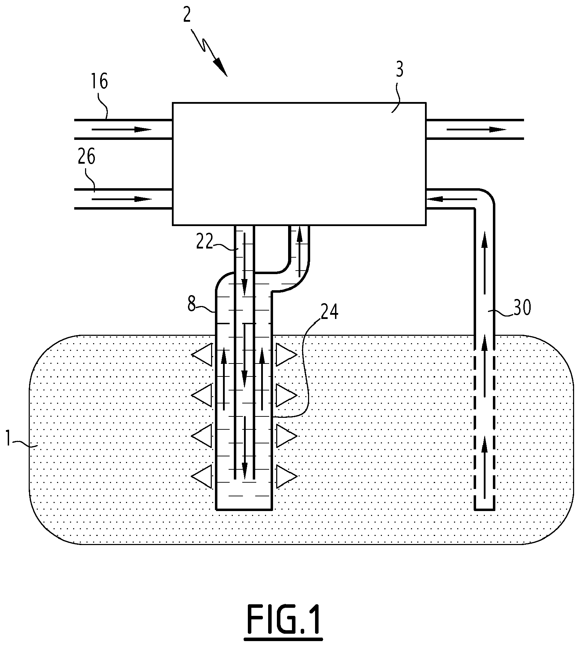

En référence à la Fig. 1, on décrit un procédé de dépollution d'un sol 1 contaminé par des hydrocarbures et/ou huiles. Un tel procédé intervient par exemple lors du démantèlement d'une station-service ou suite à une contamination due à une fuite ou autre.

Le procédé de dépollution est mis en oeuvre au moyen d'un dispositif de dépollution 2 qui est par exemple transportable et qui est apte à être déployé sur le sol contaminé 1. Par transportable et déployable, on entend que le dispositif de dépollution 2 peut être complètement stocké à l'état démonté dans un contenant déplaçable 3, par exemple au moyen d'un véhicule automobile, et qu'il peut être sorti du contenant et monté sur le sol contaminé 1 lorsque le dispositif de dépollution a été amené sur le site où est situé le sol contaminé 1. Ainsi, le dispositif de dépollution 2 peut être amené de site en site de façon simple et être déployé lorsqu'il doit être utilisé. Le dispositif de dépollution 2 est par exemple logé dans un caisson autonome en énergie, comme cela sera décrit ultérieurement, pouvant être transporté par un véhicule, du type camion et bateau ou autre.

Le dispositif de dépollution 2 comprend au moins une source de liquide 4, un dispositif de chauffage 6 du liquide de la source de liquide 4, un circuit de tuyauterie 8 permettant de faire circuler le liquide dans le dispositif de dépollution 2 et dans le sol contaminé 1 et un dispositif de mise en circulation 10 du liquide dans le circuit de tuyauterie 8.

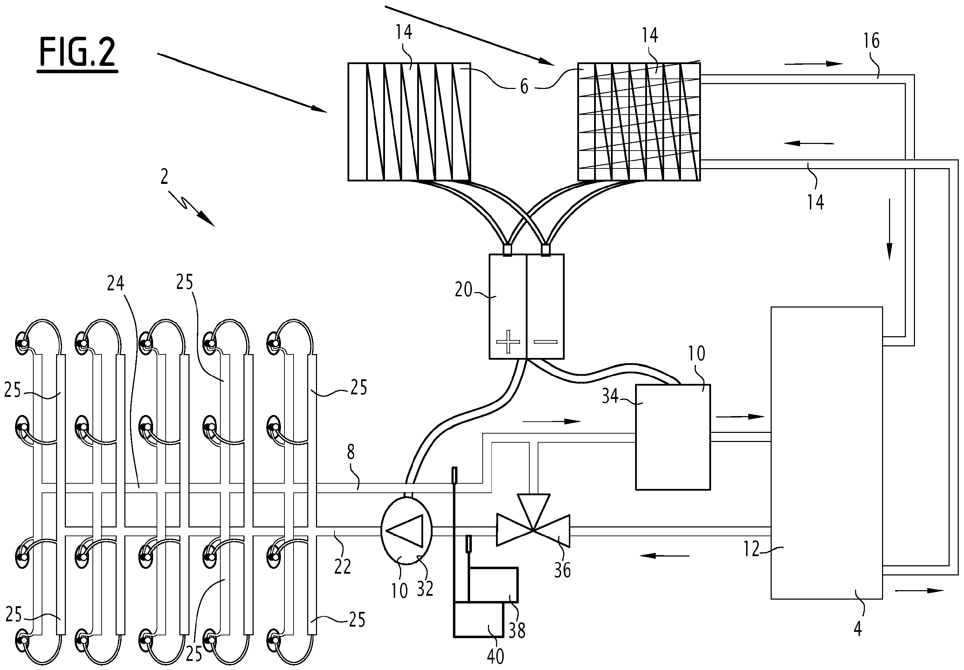

Le liquide de la source de liquide 4 est par exemple de l'eau. La source de liquide 4 peut être formée d'un réservoir 12, comme représenté sur la Fig. 2, ou d'une source externe, par exemple présente sur le site où est situé le sol contaminé 1, comme de l'eau en provenance d'un réseau de fourniture d'eau ou de l'eau en provenance d'une nappe phréatique sous le sol contaminé ou à proximité de celui-ci. L'utilisation de l'eau comme liquide vecteur de chaleur, comme cela sera décrit ultérieurement, permet d'utiliser une ressource facile d'accès, renouvelable et peu coûteuse.

Le dispositif de chauffage 6 du liquide est agencé pour permettre le chauffage du liquide au moyen d'une énergie renouvelable. L'énergie renouvelable est par exemple de l'énergie solaire. Dans ce cas, le dispositif de chauffage 6 comprend des moyens pour collecter l'énergie solaire, par exemple des cellules photovoltaïques 14, des moyens pour convertir l'énergie collectée en chaleur et des moyens pour transmettre la chaleur produite au liquide. La conversion de l'énergie en chaleur peut par exemple être obtenue par des résistances, agencées pour chauffer une conduite 16 du circuit de tuyauterie 8, reliant la source de liquide 4 au dispositif de chauffage 6, dans laquelle le liquide circule. Le liquide chauffé est ensuite par exemple acheminé au réservoir par une conduite 18 reliant le dispositif de chauffage 6 au réservoir 12. Il est entendu que le dispositif de chauffage 6 pourrait être agencé de façon différente, tant qu'il permet de convertir l'énergie renouvelable en chaleur transmise au liquide. L'énergie renouvelable pourrait être, en variante ou en complément de l'énergie solaire, de l'énergie éolienne.

Les moyens pour collecter l'énergie renouvelable peuvent également être utilisés pour produire de l'électricité permettant d'alimenter certains éléments électriques du dispositif de dépollution 2, comme cela sera décrit ultérieurement. A cet effet, les cellules photovoltaïques 14 sont par exemple reliées à une batterie 20, comme représenté sur la Fig. 2. Ainsi, le dispositif de dépollution 2 peut fonctionner de façon autonome, uniquement à partir de l'énergie renouvelable collectée, l'alimentation électrique nécessaire au fonctionnement du dispositif de dépollution 2 étant également obtenue à partir de cette énergie.

Le circuit de tuyauterie 8 comprend des conduites aptes à acheminer le liquide depuis et vers la source de liquide 4, par exemple le réservoir 12, comme représenté sur la Fig. 2. Ainsi, le circuit de tuyauterie 8 comprend les conduites 14 et 16 permettant de transporter le liquide entre le réservoir 12 et le dispositif de chauffage 6, comme décrit précédemment. En outre, le circuit de tuyauterie 8 comprend une ou plusieurs conduites permettant de faire circuler le liquide dans le sol contaminé 1, comme représenté sur les Fig. 1 et 2. Plus particulièrement, le circuit de tuyauterie 8 comprend une ou plusieurs conduites 22 acheminant le liquide du réservoir 12 vers le sol contaminé 1 et une ou plusieurs conduites 24 correspondantes acheminant le liquide du sol contaminé 1 vers le réservoir 12. Les conduites 22 et 24 comprennent une partie s'étendant dans le sol contaminé 1 de sorte que le liquide circule dans le sol contaminé 1 lorsqu'il est acheminé dans ces conduites. Selon un mode de réalisation, chaque conduite 22, 24 se divise en plusieurs branches 25 s'étendant dans le sol sensiblement parallèlement les unes par rapport aux autres et permettant de faire circuler le liquide en différents endroits du sol, comme cela sera décrit ultérieurement.

Selon le mode de réalisation représenté sur la Fig. 1, les conduites 22 et 24 forment un circuit fermé, c'est-à-dire que le liquide ne quitte pas le circuit de tuyauterie lorsqu'il circule dans le sol contaminé 1, comme cela sera décrit ultérieurement. En variante ou en complément, au moins une conduite 22 est ouverte, c'est-à-dire que le liquide acheminé dans cette conduite 22 est injecté dans le sol contaminé 1, comme cela sera décrit ultérieurement.

Il convient de noter que l'agencement du circuit de tuyauterie 8 pourrait être différent, par exemple en comprenant des conduites acheminant directement le liquide du dispositif de chauffage 6 vers le sol contaminé 1, sans passer par le réservoir 12.

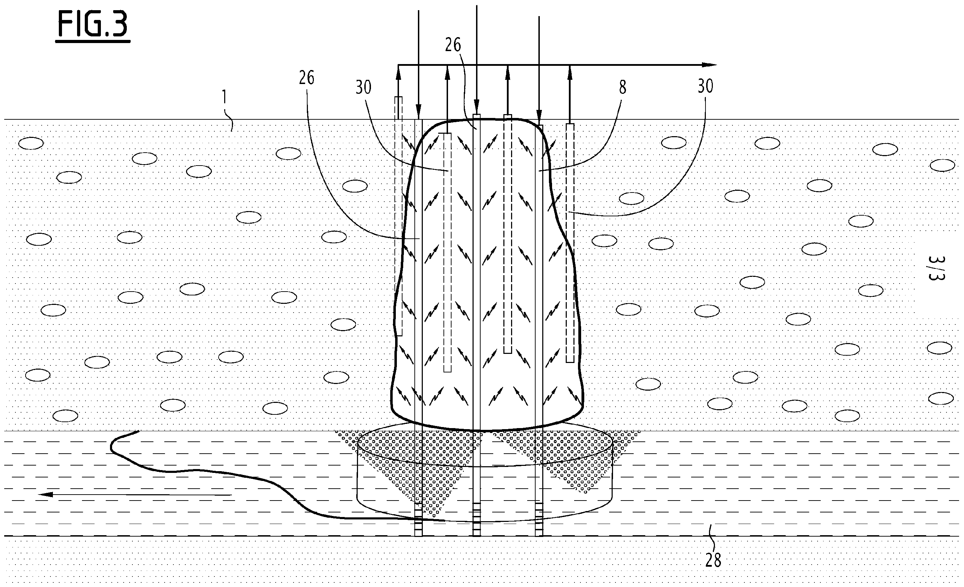

Selon un mode de réalisation représenté sur la Fig. 3, le circuit de tuyauterie 8 comprend en outre une ou plusieurs conduites 26 permettant d'injecter de l'air chauffé dans le sol contaminé 1 et/ou dans l'aquifère 28 située, dans certains cas, sous le sol contaminé 1, comme cela sera décrit ultérieurement. Cette ou ces conduites 26 sont alors reliées à un réservoir d'air chauffé (non représenté) au moyen du dispositif de chauffage 6.

Selon un mode de réalisation représenté sur les Fig. 1 et 3, le circuit de tuyauterie 8 comprend en outre une ou plusieurs conduites 30 permettant d'extraire des gaz hors du sol contaminé 1. Cette ou ces conduites 30 sont par exemple reliées à un dispositif d'aspiration et à un dispositif de récupération des gaz, comme cela sera décrit ultérieurement.

Le dispositif de mise en circulation 10 comprend par exemple au moins une pompe 32 alimentée en électricité par la batterie 20. Une pompe 32 est par exemple agencée sur chaque conduite 22 pour faire circuler le liquide du réservoir 12 au sol contaminé 1. Le dispositif de mise en circulation 10 peut en outre comprendre au moins une pompe à chaleur 34 (Fig. 2) agencée sur la ou chaque conduite 24 afin de chauffer à nouveau le liquide ayant circulé dans le sol contaminé 1. La pompe à chaleur 34 est également alimentée en électricité par la batterie 20. Le dispositif de mise en circulation 10 peut en outre comprendre une valve trois voies 36 reliant la conduite 22 à la conduite 24, permettant de modifier la circulation du liquide dans le circuit de tuyauterie 8, par exemple afin de permettre une régulation en température du liquide dans les différentes conduites 22, 24. Ainsi, la valve trois voies 36 permet par exemple de mettre en communication fluidique la conduite 22 et la conduite 24 en amont des branches 25 s'étendant dans le sol.

Afin de déterminer la température du liquide circulant dans le dispositif de dépollution 2, celui-ci comprend au moins un capteur de température du fluide circulant dans le circuit de tuyauterie 8. A titre d'exemple, le dispositif de dépollution 2 comprend un capteur de température 38 agencé pour mesurer la température dans la conduite 22 et un capteur de température 40 agencé pour mesurer la température dans la conduite 24.

Le dispositif de dépollution 2 est pilotable à distance par l'intermédiaire d'une interface distante, c'est-à-dire que les paramètres de mise en oeuvre d'un procédé de dépollution qui va être décrit ci-dessous peuvent être réglés à distance par un opérateur qui n'a pas besoin d'être présent sur le site où est situé le sol contaminé 1. Ainsi, à titre d'exemple, les paramètres suivants sont ajustés à distance : température de chauffage du liquide et/ou de l'air, débit de circulation du liquide et/ou de l'air, commande des pompes 32 et 34, commande de la valve trois voies 36, etc. En outre, le dispositif de dépollution 2 est agencé pour transmettre des informations à l'interface distante, telles que, par exemple, les températures mesurées par les capteurs de température 38, 40. Pour ce faire, le dispositif de dépollution 1 est pourvu de tout moyen de communication adapté entre l'interface distante et les éléments du dispositif de dépollution 1. L'interface distante est par exemple une application ou une plateforme internet ou autre.

Un procédé de dépollution d'un sol contaminé 1 au moyen d'un dispositif de dépollution 2 tel que décrit ci-dessus.

Lorsqu'un sol contaminé 1 doit être dépollué, un état du sol est établi, afin de déterminer le type et l'importance de la pollution, notamment en terme de surface et de profondeur atteintes par les hydrocarbures et/ou huiles. La composition du sol contaminé est également déterminée, notamment pour connaître le type et la concentration de bactéries présentes dans le sol contaminé. On notera que ces déterminations peuvent être réalisées au cours de la durée de l'exploitation du sol, avant sa dépollution, afin d'assurer un suivi de la pollution du sol au cours de son exploitation. Ainsi, un état en continu du sol peut être connu de l'exploitant du sol de sorte que les mesures à mettre en oeuvre pour la dépollution peuvent être déterminées au fur et à mesure de l'exploitation du sol et qu'il n'est pas nécessaire de faire des mesures spécifiques au moment du début de la dépollution. En variante, l'état du sol et sa composition sont déterminés au moment où l'on décide de procéder à sa dépollution.

On amène le dispositif de dépollution 2 rangé dans son contenant transportable 3 sur le site où le sol contaminé 1 est situé et le dispositif de dépollution 2 est déployé sur ce sol. En particulier, les éléments nécessaires sont sortis du contenant transportable 3 et installés. Ainsi, le dispositif de chauffage 6 est installé pour récolter l'énergie renouvelable et le circuit de tuyauterie 8 est déployé pour enfoncer les branches 25 des conduites 22 et 24 dans le sol contaminé 1.

La profondeur d'enfoncement et la répartition de ces branches 25 dépendent de l'importance de la pollution du sol contaminé et sont déterminées en fonction de l'analyse du sol contaminé 1 décrite précédemment.

Le liquide est ensuite mis en circulation dans le circuit de tuyauterie 8 afin d'être chauffé dans le dispositif de chauffage 6 et de circuler dans le sol contaminé. La température à laquelle est chauffé le liquide est une température d'activité bactériologique inférieure à 100°C favorisant l'activité des bactéries dans le sol contaminé 1. La température d'activité bactériologique est déterminée en fonction de l'analyse du sol contaminé 1 qui permet de déterminer le type et la densité de bactéries dans le sol. La température d'activité bactériologique est par exemple comprise entre 25°C et 40°C.

Le liquide chauffé à la température d'activité bactériologique permet de chauffer le sol contaminé 1 à cette température afin de promouvoir le développement et l'activité bactériologique dans ce sol, les bactéries dégradant ainsi les hydrocarbures et/ou les huiles présentes dans le sol contaminé 1.

Dans le cas d'un circuit de tuyauterie 8 fermé, le sol contaminé est chauffé par conduction en tous les endroits où des branches 25 sont introduites dans le sol contaminé, comme représenté sur la Fig. 1. L'utilisation d'un circuit fermé permet de réutiliser le liquide une fois qu'il est passé dans le sol en le renvoyant vers le réservoir 12 et en le chauffant à nouveau. Ainsi, la consommation de ressources par le dispositif de dépollution est limitée.

Le sol contaminé est ainsi chauffé à la température d'activité bactériologique, ce qui promeut l'activité bactériologique dans le sol et permet une dépollution du sol par bio-stimulation, comme indiqué précédemment. La durée pendant laquelle le liquide circule dans le sol dépend du degré de pollution du sol et de la concentration en bactéries dans ce sol, ces paramètres étant connus de l'analyse préalable du sol contaminé. Le dispositif de dépollution est piloté, par exemple à distance, pour faire circuler le liquide jusqu'à obtenir la dépollution du sol souhaitée.

Si la concentration en bactéries dans le sol contaminé 1 est insuffisant pour permettre la dépollution par bio-stimulation, une étape d'injection d'oxygène et/ou de nutriments dans le sol est prévue afin de promouvoir le développement bactériologique dans le sol contaminé et atteindre la concentration bactériologique souhaitée. Une telle injection se fait par exemple par la ou les conduites ouvertes 26 s'étendant dans le sol.

En complément, la dépollution par bio-stimulation peut également être obtenue en injectant un liquide et/ou de l'air chauffé à la température d'activité bactériologique dans le sol contaminé, par exemple en injectant directement une partie du liquide et/ou de l'air chauffé dans le sol.

Le dispositif de dépollution 2 peut également être utilisé, avec la même installation, pour dépolluer le sol contaminé 1 par désorption thermique, simplement en augmentant la température à laquelle est chauffée le liquide. Pour ce faire, le liquide est chauffé à une température de désorption thermique, inférieure à 150°C, par exemple voisine de 120°C, et supérieure à la température d'activité bactériologique. En chauffant le sol à la température de désorption thermique par l'intermédiaire du liquide, il est possible de faire passer les hydrocarbures dans le sol contaminé 1 à l'état gazeux et de récupérer les gaz générés par la ou les conduites 30 grâce au dispositif d'aspiration, comme représenté sur les Fig. 1 et 3. Un tel procédé de dépollution par désorption thermique, en complément de la dépollution par bio-stimulation, permet d'améliorer la dépollution du sol en extrayant certains hydrocarbures du sol qui ne pourraient pas être biodégradés par l'activité bactériologique. La dépollution par désorption thermique ne nécessite pas de modifier le dispositif de dépollution 2 ou d'y ajouter des éléments. Les gaz récupéré par la conduite 30 peuvent être traités dans le dispositif de récupération des gaz, qui est par exemple agencé pour refaire passer les hydrocarbures à l'état liquide. Le changement de la température de chauffage peut être piloté à distance. La durée de l'étape de dépollution par désorption thermique

Selon un mode de réalisation, le procédé comprend une étape d'injection d'air chauffé dans l'aquifère 28 afin chauffer celle-ci et permettre l'évacuation des hydrocarbures éventuellement présents dans l'aquifère par désorption thermique, comme représenté sur les Fig. 3.

Le procédé de dépollution décrit ci-dessus est simple à mettre en oeuvre, économique et ne génère pas de pollution supplémentaire, notamment par rejet de dioxyde de carbone. En outre, le dispositif de dépollution 2 est déplaçable et pilotable à distance, ce qui le rend pratique d'utilisation.

## Revendications

1. Procédé de dépollution d'un sol contaminé (1) par des hydrocarbures et/ou huiles, comprenant au moins les étapes suivantes :
- chauffer un liquide à une température d'activité bactériologique inférieure à 100°C au moyen d'une énergie renouvelable,
- faire circuler le liquide chauffé dans le sol contaminé (1) à dépolluer afin de chauffer ledit sol à une température d'activité bactériologique favorisant l'activité des bactéries dans le sol afin de dépolluer ledit sol (1) au moins par bio-stimulation.

2. Procédé de dépollution selon la revendication 1, dans lequel le chauffage du sol contaminé (1) par le liquide se fait par conduction en faisant circuler le liquide chauffé dans un circuit de tuyauterie (8) s'étendant dans ledit sol contaminé (1).

3. Procédé de dépollution selon la revendication 2, dans lequel le chauffage du sol contaminé (1) par le liquide se fait en outre par injection d'au moins une partie du liquide chauffé dans le sol contaminé.

4. Procédé de dépollution selon l'une quelconque des revendications 1 à 3, comprenant en outre une étape de circulation d'air chauffé dans le sol contaminé (1), l'air étant chauffé à une température d'activité bactériologique inférieure à 100°C au moyen d'une énergie renouvelable.

5. Procédé de dépollution selon l'une quelconque des revendications 1 à 4, comprenant une étape d'injection d'oxygène et/ou de nutriments dans le sol contaminé (1) afin de promouvoir le développement bactériologique dans le sol contaminé (1).

6. Procédé de dépollution selon l'une quelconque des revendications 1 à 5, comprenant en outre une étape de dépollution du sol contaminé (1) par désorption thermique, en chauffant le liquide à une température de désorption thermique, différente de la température d'activité bactériologique et inférieure ou égale 150°C, au moyen d'une énergie renouvelable et en faisant circuler ledit liquide chauffé dans le sol contaminé (1) afin de chauffer ledit sol à une température de désorption thermique afin de dépolluer le sol contaminé (1) par désorption thermique.

7. Procédé de dépollution selon la revendication 6, dans lequel l'étape de dépollution du sol par désorption thermique comprend en outre l'aspiration des gaz produits par le chauffage du sol contaminé (1) à une température de désorption thermique.

8. Procédé de dépollution selon l'une quelconque des revendications 1 à 7, dans lequel l'énergie renouvelable est de l'énergie solaire.

9. Procédé de dépollution selon l'une quelconque des revendications 1 à 8, dans lequel les paramètres d'entrée du procédé, tels que la température de chauffage du liquide, la durée de circulation du liquide dans le sol, sont réglés par un dispositif de commande situé à distance du sol contaminé.

10. Procédé de dépollution selon l'une quelconque des revendications 1 à 9, comprenant une étape préalable de déploiement d'un dispositif de dépollution (2) transportable sur le sol contaminé, ledit dispositif de dépollution (2) comprenant au moins un réservoir (12) de liquide, un dispositif de chauffage (6) du liquide et un circuit de tuyauterie (8) pour faire circuler le liquide dans le sol contaminé.

11. Dispositif de dépollution (2) pour la mise en oeuvre d'un procédé de dépollution d'un sol contaminé (1) selon l'une quelconque des revendications 1 à 10, comprenant au moins :
- une source de liquide (4),
- un dispositif de chauffage (6) permettant de chauffer le liquide de la source de liquide (4) à une température d'activité bactériologique inférieure à 100°C au moyen d'une énergie renouvelable
- un circuit de tuyauterie (8) permettant de faire circuler le liquide dans le dispositif de dépollution (2) et dans le sol contaminé (1), et
- un dispositif de mise en circulation (10) du liquide dans le circuit de tuyauterie (8).

12. Dispositif de dépollution selon la revendication 11, comprenant en outre un contenant (3) autonome en énergie et transportable, agencé pour recevoir la source de liquide (4), le dispositif de chauffage (6), le circuit de tuyauterie (8) et le dispositif de mise en circulation (10) lors du transport du dispositif de dépollution.

13. Dispositif de dépollution selon la revendication 11 ou 12, agencé pour être pilotable à distance par l'intermédiaire d'une interface distante.
